# EUROPEAN PATENT SPECIFICATION

(11) **EP 2 405 165 B1**
(45) Date of publication and mention of the grant of the patent: **05.08.2015**
(21) Application number: 11170864.0
(22) Date of filing: 22.06.2011
(51) Int. Cl.: F16K 17/04, F15B 13/02

(54) **Relief valve**
Ablassventil
Soupape de décharge

(30) Priority: 07.07.2010 JP 2010155130; 07.07.2010 JP 2010155131
(43) Date of publication of application: 11.01.2012
(73) Proprietor: AISIN SEIKI KABUSHIKI KAISHA, Kariya-shi, Aichi 448-8650 (JP)
(72) Inventor: Miura, Yoshinori, Kariya-shi, Aichi 448-8650 (JP); Isoda, Atsuo, Kariya-shi, Aichi 448-8650 (JP)
(74) Representative: Kramer Barske Schmidtchen Patentanwälte PartG mbB

(56) References cited:
- DE-A1-102009 048 439
- JP-A- 2003 166 658

## Description

### TECHNICAL FIELD

This disclosure relates to a relief valve used for adjusting a level of hydraulic pressure of fluid (e.g., hydraulic pressure) used for lubricating an engine or the like, the relief valve having a function to change a level of the hydraulic pressure to open a valve.

### BACKGROUND DISCUSSION

A relief valve generally controls a hydraulic pressure within a hydraulic circuit so as not to be greater than a predetermined level by opening a passage through which an excessive oil in the hydraulic circuit may be discharged when the hydraulic pressure within the hydraulic circuit reaches or is greater than a predetermined level.

For example, such relief valve disclosed in Journal of Technical Disclosure No. 2006-505946 published by the Japan Institute of Invention and Innovation (November 9, 2006) (hereinafter referred to as Reference 1) includes a body, a valve, a spring, a retainer, a plug, an oil passage for supplying oil to a portion formed between the retainer and the plug, and a backpressure control valve for controlling the supply of the oil.

According to the relief valve of Reference 1, in a case where the oil is not supplied to the portion formed between the retainer and the plug, the retainer is positioned at an upper end surface of the plug and the spring is not compressed, i.e. the spring is extended. As a result, a level of the hydraulic pressure to open the valve is set to be low (e.g., a low pressure state). On the other hand, when the oil flows into the portion formed between the retainer and the plug, the retainer is moved upwardly so as to compress the spring. As a result, the level of the hydraulic pressure to open the valve is set to be high (e.g., a high pressure state).

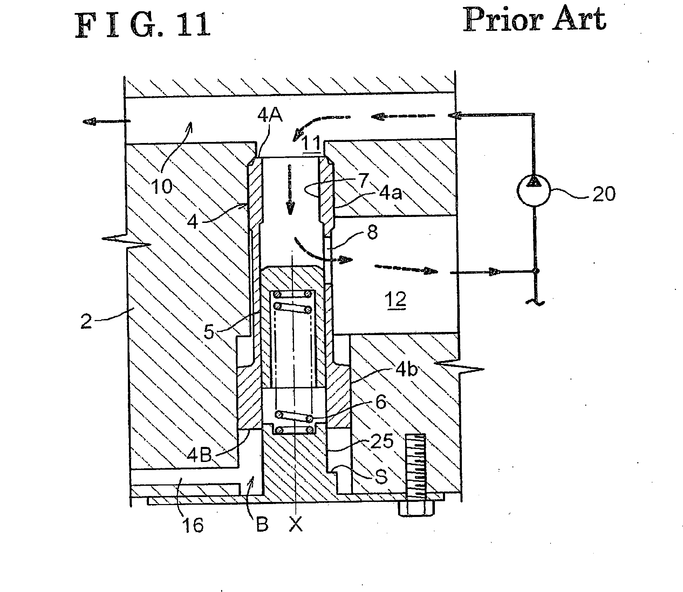

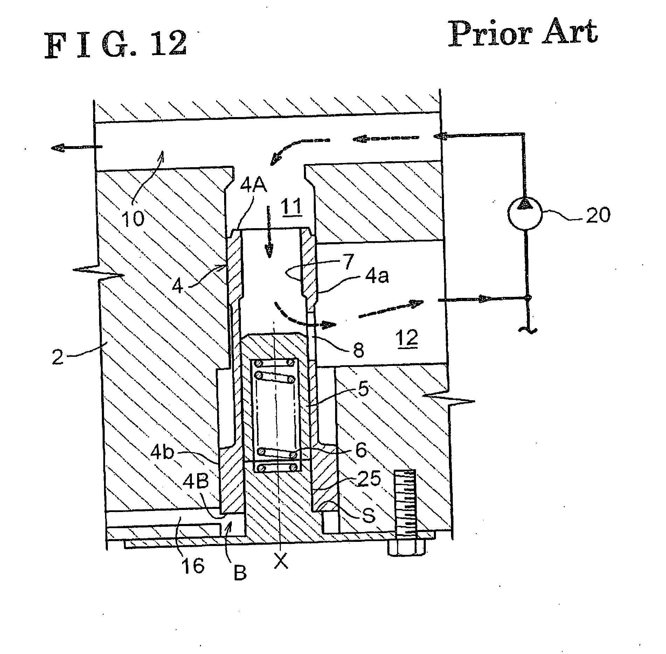

An example of a known relief valve is illustrated in Figs. 11 and 12. The known relief valve includes a valve body 2, a sleeve 4, a valve 5, and a spring 6. An accommodation chamber in which the sleeve 4 is accommodated is formed in the valve body 2. The accommodation chamber extends along a central axis X of the valve body 2. The valve body 2 includes a first port 11 connecting to a fluid supply passage 10, and a second port 12. A fluid supplied from an oil pump 20 is sent to the fluid supply passage 10 and is supplied through the first port 11 to the accommodation chamber. Further, the fluid is discharged from the accommodation chamber through the second port 12 to the oil pump 20. The sleeve 4 is movable in the accommodation chamber along the central axis X. The valve 5 is movable within the sleeve 4 along the central axis X. The spring 6 biases the valve 5 in a direction in which the valve 5 protrudes toward the first port 11 along the central axis X. An inflow bore 7 connecting to the first port 11 is formed in a first end portion of the sleeve 4 in a direction of the central axis X. An outflow bore 8 connecting to the second port 12 is formed in an outer surface of the sleeve 4. A guide body 25 included in the valve body 2 is positioned adjacent to a second end portion of the sleeve 4 in the direction of the central axis X so as to be in contact with an inner surface of the sleeve 4 (the second end portion of the sleeve 4 is located in the opposite direction from the first end portion of the sleeve 4 in the direction of the central axis X).

The sleeve 4 includes first and second outer circumferential slidable contact surfaces 4a and 4b that are provided in the direction of the central axis X. The first outer circumferential slidable contact surface 4a located in the vicinity of the first port 11 has a predetermined diameter. The second outer circumferential slidable contact surface 4b located in the vicinity of the second end surface 4B has a diameter larger than the predetermined diameter of the first outer circumferential slidable contact surface 4a. A first end surface 4A is formed at an axial end of the first outer circumferential slidable contact surface 4a, which is adjacent to the first port 11. A second end surface 4B is formed at an axial end of the second outer circumferential slidable contact surface 4b, which is in the opposite direction of the first end surface 4A in the direction of the central axis X. A backpressure chamber B is defined by the second end surface 4B of the sleeve 4 and the guide body 25 within the accommodation chamber of the valve body 2. A fluid flow control passage 16 transmitting a hydraulic pressure of the fluid to the backpressure chamber B is formed in the valve body 2. As illustrated in Fig. 11, in a case where the fluid is supplied through the fluid flow control passage 16 to the backpressure chamber B, the sleeve 4 is moved toward the first port 11 to low-pressure operation position (one movement limiting position) by the hydraulic pressure acting on the second end surface 4B. Meanwhile, as illustrated in Fig. 12, in a case where the fluid is discharged from the backpressure chamber B through the fluid flow control passage 16 (in a case where the hydraulic pressure in the backpressure chamber B is relieved therefrom), the sleeve 4 is moved to a high-pressure operation position (another movement limiting position), which is in the opposite direction from the first port 11 in the direction of the central axis X.

According to the known relief valve configured as above, in a case where the sleeve 4 set in the high-pressure operation position is being shifted to the low-pressure operation position, the hydraulic pressure of the fluid needs to be applied to a whole area of the second end surface 4B of the sleeve 4. In particular, the second end surface 4B is recommended to be lifted slightly further upward than an upper side of an inner space of the backpressure chamber B in order that the hydraulic pressure promptly acts on the whole area of the second end surface 4B. Therefore, according to the known relief valve, a single stopper S may be formed at a base end portion of the guide body 25 as illustrated in Figs. 11 and 12. In such case that the single stopper S is provided, the second end surface 4B of the sleeve 4 set in the high-pressure operation position may be in contact with the stopper S in such a way that both the second end surface 4B and the stopper S are located away from the central axis X. As a result, a portion of the first outer circumferential slidable contact surface 4a or the second outer circumferential slidable contact surface 4b of the sleeve 4 may be strongly pressed against and brought in contact with an inner wall surface of the accommodation chamber.

Thus, the fluid is supplied to the backpressure chamber B in a state where the sleeve 4 is set in a high-pressure operation position (high-pressure operation state). At this time, the hydraulic pressure may be non-uniformly applied to the sleeve 4. As a result, friction occurs at the contact portion between the portion of the sleeve 4 and the accommodation chamber; therefore, the sleeve 4 may not promptly start moving in reaction to the applied hydraulic pressure.

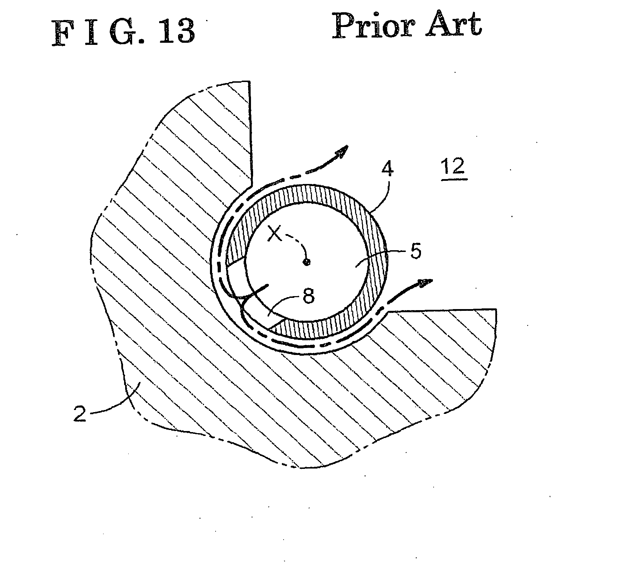

In addition, according to the known relief valve, the single outflow bore 8 is formed in the sleeve 4 having a hollow cylindrical shape. In a state where the sleeve 4 is accommodated in the accommodation chamber, the sleeve 4 is configured to face any direction about the central axis X; therefore, the sleeve 4 may not face the second port 12 as illustrated in Fig. 13. In the case that the sleeve 4 is accommodated in the accommodation chamber as described above, the fluid discharged from the outflow bore 8 flows along an outer circumferential side of the sleeve 4 as indicated by broken line arrows in Fig. 13 and thereafter reaches the second port 12. As a result, the fluid may be prevented from smoothly flowing from the outflow bore 8 to the second port 12.

In particular, in the case that the single outflow bore 8 does not face the second port 12, the hydraulic pressure of the fluid discharged from the out flow bore 8 acts on the sleeve 4, so that a portion of the outer surface of the sleeve 4, which is in contact with the valve body 2 may be worn.

A need thus exists for a relief valve, which restricts a hydraulic pressure of a fluid from being non-uniformly applied to a sleeve in a condition where the sleeve is shifted to a movement limiting position, and which enables the fluid to be smoothly discharged from an outflow bore formed at the sleeve.

JP 2003 166658A, which is the basis of the preamble of appended claim 1, discloses a double-check type selector valve comprising a valve body including therein an accomodation chamber formed along a central axis of the valve body. A sleeve which is slidably movable within the accomodation chamber contains a piston slidably movable within the sleeve. The sleeve and the piston constitute valve elements providing a function equivalent to that of two movable valves. The sleeve is movable by a control pressure to contact with an end face a seat face formed at the valve body. The piston is moveable by a further control pressure as to contact with an end face a seat face formed at the sleeve. The end faces and the sleeve faces are formed as conical surfaces around the central axis of the valve body.

### SUMMARY

The needs as stated above with respect to the known relief valve are fulfilled with a relief valve according to appended claim 1.

Appended subclaims are directed towards adventageous embodiments of the inventive relief valve.

According to an aspect of this disclosure, a relief valve, includes a valve body having therein an accommodation chamber formed along a central axis, a first port through which a fluid flows into the accommodation chamber, and a second port through which the fluid is discharged from the accommodation chamber, a sleeve formed into a cylindrical hollow shape about the central axis to slidably move along the central axis within the accommodation chamber, the sleeve including an inflow bore connecting to the first port and an outflow bore connecting to the second port, the sleeve having a first end surface which is adjacent to the first port, and a second end surface which is provided in an opposite direction from the first port in a direction of the central axis, a valve receiving a hydraulic pressure of the fluid from the first port and sliding within the sleeve along the central axis to adjoin and separate from the inflow bore, the valve being adjacent to the inflow bore to close the outflow bore and being separated from the inflow bore to open the outflow bore, a biasing member applying a biasing force to the valve in a direction against the hydraulic pressure from the first port. a valve position change mechanism applying the hydraulic pressure to the second end surface to set the sleeve in a low-pressure operation position that is adjacent to the first port, the valve position change mechanism releasing the hydraulic pressure applied to the second end surface and setting the sleeve in a high-pressure operation position by the hydraulic pressure acting on the first end surface. the high-pressure operation position being provided in the opposite direction from the first port in the direction of the central axis, and a stopper formed in a position circumferentially around the central axis and determining a movement limiting position of the sleeve toward the high-pressure operation position.

According to the aforementioned configuration of the relief valve, the stopper is formed in the position circumferentially around the central axis. Accordingly, in a state where the sleeve is set in the high-pressure operation position. the sleeve is in contact with the stopper to thereby determine the movement limiting position of the second end surface of the sleeve. In addition, a clearance is obtained between the second end surface and an inner surface of the valve body. As a result, the hydraulic pressure is prevented from non-uniformly acting on the sleeve. thereby stably maintaining the position of the sleeve. Thus, in the relief valve where the position of the sleeve is changed to thereby change or adjust a level of the hydraulic pressure to open the valve, the hydraulic pressure is prevented from non-uniformly acting on the sleeve in a condition where the sleeve is set in the movement limiting position. Therefore, the sleeve may smoothly or promptly start moving in reaction to the applied hydraulic pressure. In addition, a contact portion between the sleeve and the valve body is refrained from being worn by friction due to the non-uniformly-acting hydraulic pressure.

The stopper includes a plurality of stoppers formed at equal intervals in a circumferential area around the central axis.

Accordingly, the hydraulic pressure is uniformly applied to the stopper formed at equal intervals in the circumferential area around the central axis. In addition, the fluid may be supplied/discharged through the clearance formed between the second end surface of the sleeve and the inner surface of the valve body, thereby smoothly or promptly switching the sleeve between the low-pressure operation position and the high-pressure operation position.

According to still another aspect of the disclosure, the fluid flows between the plurality of stoppers adjoining one another in the circumferential area around the central axis and the hydraulic pressure is applied to the second end surface.

Accordingly, the fluid may flow through clearances defined between the stoppers adjoining one another; therefore, the hydraulic pressure may act on the second end surface in a case where the sleeve being in contact with the stopper moves away therefrom. Consequently, a pressure receiving area of the sleeve is secured; therefore, the position of the sleeve is surely changed.

According to a further aspect of the disclosure, the relief valve further includes a guide body fitted in the sleeve and having a guide surface defined on an outer circumferential surface to slidably contact an inner surface of the sleeve. The stopper is integrally formed with a base end portion of the guide body, and a groove having an outer diameter smaller than an outer diameter of the guide surface is formed between the stopper and the guide surface.

As described above, the groove having the outer diameter smaller than the outer diameter of the guide surface is formed between the stopper and the guide surface. Accordingly, even in a case where a cutting tool for finishing the guide surface of the guide body accidentally makes contact with the groove, the cutting tool may not reach and contact the stopper and is therefore not processed unnecessarily. Thus, the guide surface is easily finished by the cutting tool.

According to another aspect of the disclosure, the outflow bore includes a plurality of outflow bores circumferentially formed in an outer surface of the sleeve.

Accordingly, even when the sleeve is positioned so as to circumferentially surround the axis and so as to face any direction in a state where the sleeve is accommodated in the accommodation chamber of the valve body, any of the outflow bores may face the second port. Consequently, the fluid is smoothly discharged from any of the outflow bores formed in the sleeve.

According to still another aspect of the disclosure, the outflow bores are circumferentially formed at equal intervals on an entire area of the outer surface of the sleeve.

Accordingly, even when the sleeve is positioned to face any direction, any of the outflow bores may face the second port, therefore further surely discharging the fluid from any of the outflow bores.

According to a further aspect of the disclosure, the stopper is formed at a plate connected to the valve body to close the accommodation chamber.

According to the aforementioned configuration of the stopper, no additional member for thereat forming the stopper is needed, therefore reducing the size of the relief valve and preventing an increase of the weight of the relief valve.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross sectional view illustrating a condition where a relief valve according to an embodiment disclosed here is in a low-pressure operation position;
Fig. 2 is a cross sectional view illustrating a condition where a valve of the relief valve set in the low-pressure operation position is opened;
Fig. 3 is a cross sectional view illustrating a condition where the relief valve according to the embodiment disclosed here is in a high-pressure operation position;
Fig. 4 is a cross sectional view illustrating a condition where the valve of the relief valve set in the high-pressure operation position is opened;
Fig. 5 is a schematic view illustrating a configuration of a sleeve of the relief valve according to the embodiment disclosed here;
Fig. 6 is a cross sectional view illustrating a configuration of a stopper of the relief valve according to the embodiment disclosed here;
Fig. 7A is a top plan view illustrating the configuration of the stopper;
Fig. 7B is a perspective view illustrating the configuration of the stopper;
Fig. 8 is a cross sectional view of the sleeve accommodated in an accommodation chamber formed in the valve body of the relief valve according to the embodiment disclosed here;
Fig. 9 is a cross sectional view illustrating the configuration of the stopper of the relief valve according to a modified example of the embodiment disclosed here;
Fig. 10A is a top plan view illustrating the configuration of the stopper according to the modified example of the embodiment disclosed here;
Fig. 10B is a perspective view illustrating the configuration of the stopper according to the modified example of the embodiment disclosed here;
Fig. 11 is a cross sectional view illustrating a condition where a known relief valve is in a low-pressure operation position;
Fig. 12 is a cross sectional view illustrating a condition where the known relief valve is in a high-pressure operation position; and
Fig. 13 is a cross sectional view of a sleeve accommodated in an accommodation chamber formed in a valve body of the known relief valve.

### DETAILED DESCRIPTION

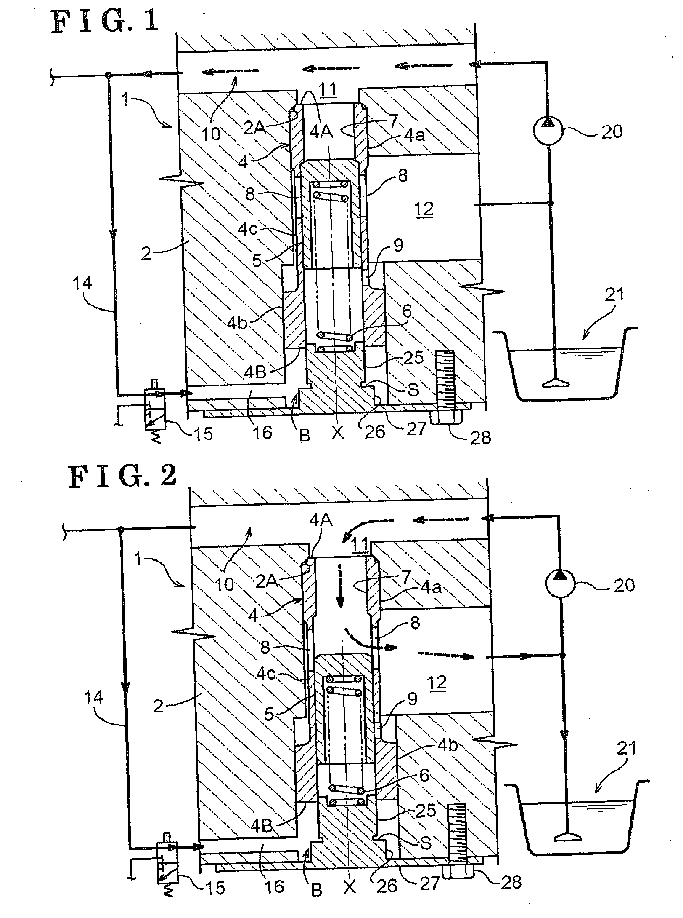

An embodiment of a relief valve 1 of this disclosure will be explained as follows with reference to illustrations of the attached drawings. As illustrated in Figs. 1 to 5, the relief valve 1 includes a valve body 2, a sleeve 4 accommodated in the valve body 2, a valve 5 accommodated in the sleeve 4, and a spring 6 serving as a biasing member. The relief valve 1 configured as described above relieves a hydraulic overpressure of fluid (oil) from the valve body 2.

The relief valve 1 is attached to a fluid passage through which the fluid is supplied to an engine in order to lubricate the engine. The fluid stored in an oil pan 21 of the engine is supplied to the relief valve 1 by an oil pump 20 driven by the engine. The relief valve 1 changes a position of the sleeve 4 in accordance with an operation of an electromagnetic switch valve 15, thereby changing or adjusting a level of the hydraulic pressure to open the valve 5. The changing operation of the level of the hydraulic pressure by the relief valve 1 will be described below. The relief valve 1 according to the embodiment may be utilized to control different types of fluids such as water, gas, and the like, instead of the oil serving as the fluid.

The valve body 2 includes a fluid supply passage 10 to which the fluid is supplied from the oil pan 21 by the oil pump 20, a first port 11 supplied with the fluid flowing from the fluid supply passage 10, a second port 12 discharging the fluid from the valve body 2, and an accommodation chamber. The accommodation chamber is formed along a central axis X of the valve body 2 so that the first port 11 and the second port 12 connect to each other.

The accommodation chamber of the valve body 2 includes a first circumferential inner surface formed in the vicinity of the first port 11 and having a predetermined inner-diameter portion, and a second circumferential inner surface formed in the vicinity of the second port 12 in the opposite direction from the first port 11 in a direction of the central axis X. The second circumferential inner surface has an inner diameter larger than an inner diameter of the predetermined inner-diameter portion of the first circumferential inner surface. The first port 11 connects to a first end portion of the accommodation chamber, which is adjacent to the first port 11 in the direction of the central axis X. The second port 12 is in an intermediate position in the direction of the central axis X within the accommodation chamber so as to connect to the accommodating portion in a direction perpendicular to the central axis X. In addition, a backpressure chamber B is defined in the accommodation chamber so as to be located at a second end portion of the accommodation chamber, which is in the opposition direction from the first port 11 (the first end portion of the accommodation chamber) in the direction of the central axis X. A fluid flow control passage 16 connecting to the backpressure chamber B is formed in the valve body 2.

The sleeve 4 is slidably accommodated in the accommodation chamber along the central axis X so as to contact an inner wall surface of the accommodation chamber. The valve 5 is slidably accommodated in the sleeve 4 along the central axis X so as to contact an inner surface of the sleeve 4. The relief valve 1 further includes a guide body 25 and the spring 6 (biasing member) that are accommodated in the accommodation chamber of the valve body 2. The spring 6 biases the valve 5 toward the first port 11. The guide body 25 is fitted to the second circumferential inner surface of the valve body 2 in the opposite direction from the first port 11.

The sleeve 4 is formed into a hollow cylindrical shape circumferentially about the central axis X. An inflow bore 7 extending along the central axis X is formed at a first end portion of the sleeve 4, which is adjacent to the first port 11. Plural outflow bores 8 and an open bore 9 are formed in an outer surface of the sleeve 4. A first end surface 4A is formed at the first end portion of the sleeve 4, which faces the first port 11. A second end surface 4B having a planar shape is formed at a second end portion of the sleeve 4 in the opposite direction from the first end surface 4A in the direction of the central axis X. A first outer circumferential slidable contact surface 4a slidably contacting the predetermined inner-diameter portion of the accommodation chamber is formed at the sleeve 4 so as to be positioned in the vicinity of the front end surface 4A. A second outer circumferential slidable contact surface 4b slidably contacting a large-diameter portion of the accommodation chamber is formed at the sleeve 4 so as to be positioned in the vicinity of the second end surface 4B. An intermediate circumferential outer portion 4c is formed at an intermediate portion between the first outer circumferential slidable contact surface 4a and the second outer circumferential slidable contact surface 4b so as not to slidably contact the inner wall surface of the accommodation chamber. The intermediate circumferential outer portion 4c has an outer diameter smaller than an inner diameter of the accommodation chamber.

In addition, because the sleeve 4 includes the intermediate circumferential outer portion 4c that does not contact the inner wall surface of the accommodation chamber, a sliding resistance of the sleeve 4 against the inner wall surface of the accommodation chamber is reduced when the sleeve 4 moves in the accommodation chamber along the central axis X. The open bore 9 is formed in the sleeve 4 so that the fluid flowing from the backpressure chamber B to the valve 5 may be released through the second port 12 from the valve body 2 when the valve 5 moves as the hydraulic pressure in the fluid supply passage 10 increases.

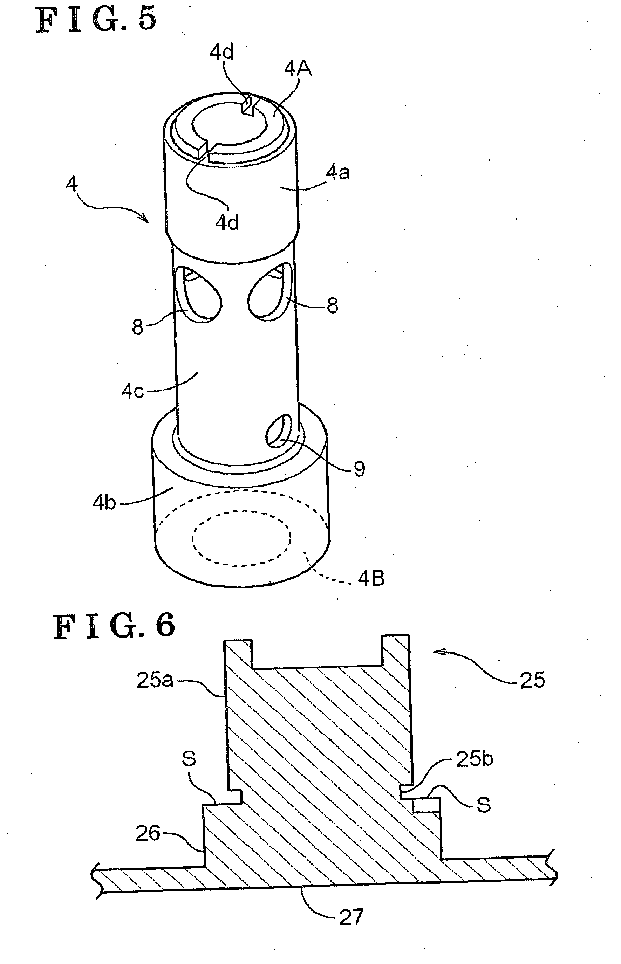

As illustrated in Fig. 5, the first end surface 4A of the sleeve 4 includes a radially outward surface, a radially inward surface, and an inclined surface. The radially outward surface has an entirely flat portion along a circumferential direction of the sleeve 4. The radially inward surface has an entirely flat portion along the circumferential direction while being provided closer to the first port 11 in the direction of the central axis X than the radially outward surface. The inclined surface is inclined toward the first port 11 from the radially outward surface to the radially inward surface while continuously extending along the circumferential direction. Further, notched portions 4d are formed at the first end surface 4A so as to be notched from the radially inward surface to the radially outward surface. According to the aforementioned configuration of the sleeve 4, in a case where the sleeve 4 is shifted toward the first port 11, the first end surface 4A is brought in contact with a contact surface 2A of the valve body 2, which is in the vicinity of the first port 11. At this time, a fluid passage connecting to the radially outward surface of the first end surface 4A is narrowed by the tight contact between the contact surface 2A and the first end surface 4A. Accordingly, the fluid from the first port 11 may not easily flow toward the radially outward surface of the first end surface 4A. However, the notched portions 4d provided at the first end surface 4A allow the fluid from the first port 11 to flow substantially entirely around the radially outward surface of the first end surface 4A, thereby smoothly moving the sleeve 4.

The valve 5 is formed into a shaft shape having an outer diameter fitted into an inner space of the sleeve 4. The valve 5 is slidably arranged in the sleeve 4 along the central axis X so as to be in contact with the inner surface of the sleeve 4. A spring accommodation portion is formed inside the valve 5 along the central axis X. The spring 6 is arranged between the spring accommodation portion and the guide body 25.

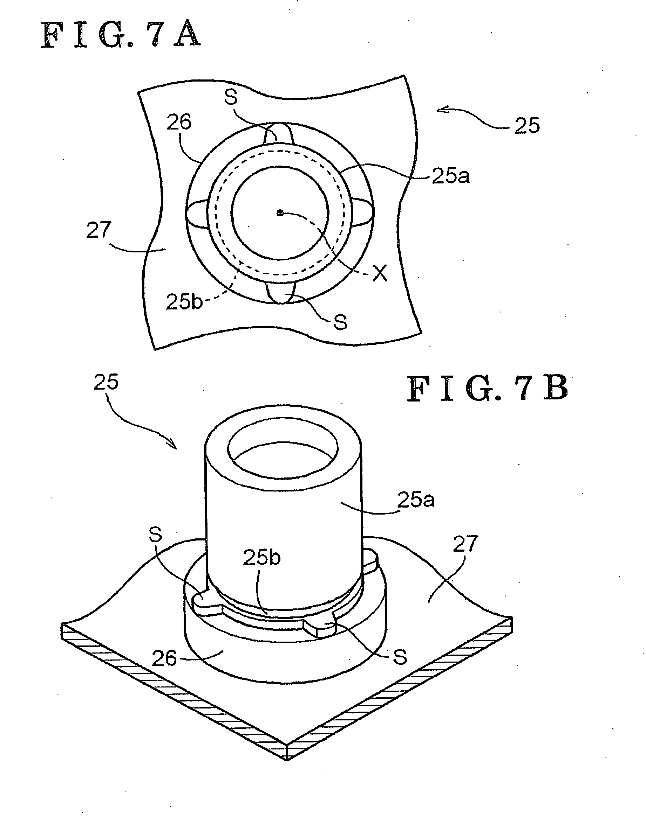

As illustrated in Figs. 6, 7A, and 7B, the guide body 25 is formed so as to vertically stand relative to a plate 27 in a state where a base portion 26 having a diameter larger than a diameter of an outer circumferential surface of the guide body 25 is arranged between the guide body 25 and the plate 27. The plate 27 is connected to the valve body 2 by a bolt 28. Accordingly, the guide body 25 is integrated with the valve body 2 to close the accommodation chamber; therefore, the backpressure chamber B is formed. Further, the guide body 25 is arranged circumferentially about the central axis X. Furthermore, plural stoppers S integrally formed with the guide body 25 are arranged at a boundary portion (base end portion) of the guide body 25 with the base portion 26 (in the vicinity of the plate 27) so as to be positioned circumferentially about the central axis X.

The stoppers S determine a movement limiting position of the sleeve 4 toward the backpressure chamber B. Respective contact surfaces of the plural stoppers S are formed at positions coinciding with an imaginary plane surface in which the contact surfaces are arranged perpendicular to the central axis X, so as to keep a longitudinal orientation of the sleeve 4 in parallel with the central axis X in a state where the contact surfaces are in contact with the second end surface 4B of the sleeve 4. Moreover, each of the stoppers S keeps a distance between the second end surface 4B and an inner surface of the plate 27 (the inner surface of the plate 27 is a portion of an inner surface of the valve body 2) at a predetermined value. Thus, the movement limiting position of the sleeve 4 toward the backpressure chamber B is determined by the plural stoppers S, so that the hydraulic pressure is restricted from being non-uniformly applied to the sleeve 4.

In particular, in the relief valve 1 according to the embodiment, in a case where the sleeve 4 moves along the central axis X, the inner surface of the sleeve 4 slidably moves on a guide surface 25a while contacting the guide surface 25a that is defined on the outer circumferential surface of the guide body 25. The guide surface 25a is finely processed and finished. A groove 25b having a diameter smaller than the diameter of the guide surface 25a is formed at an intermediate portion between the guide surface 25a and the stoppers S in order to prevent a cutting tool from unnecessarily or accidentally cutting the stoppers S when the guide surface 25a is finished by the cutting tool.

An intermediate fluid passage 14 is formed between the fluid supply passage 10 and the switch valve 15 so that the switch valve 15 transmits the hydraulic pressure from the fluid supply passage 10 to the fluid flow control passage 16. The intermediate fluid passage 14, the switch valve 15, and the fluid flow control passage 16 configure a valve position change mechanism of the relief valve 1 according to the embodiment.

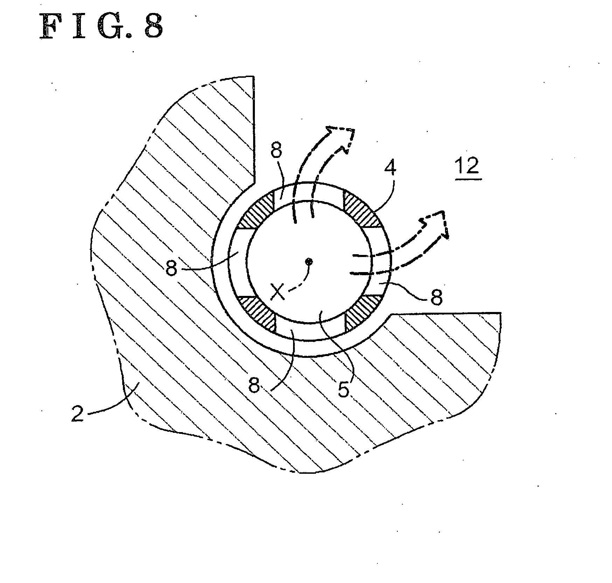

Moreover, according to the relief valve of the embodiment, as illustrated in Fig. 8, the four outflow bores 8 are circumferentially formed at equal intervals in the outer surface of the sleeve 4. The outflow bores 8 illustrated in Fig. 8 are an example of plural outflow bores formed in the sleeve 4 in the circumferential direction. In particular, a whole area of the outer surface of the sleeve 4 is recommended to be equally divided into three or more portions. In addition, at least the single outflow bore 8 may be formed in each of the divided portions. Alternatively, the two or more outflow bores 8 may be formed in each of the divided portions. In other words, the two or more outflow bores 8 are recommended to be formed in the sleeve 4 in the circumferential direction.

[Operation of the relief valve] According to the aforementioned configuration of the relief valve 1 of the embodiment, the switch valve 15 is operated to a fluid supply position as illustrated in Figs. 1 and 2, thereby supplying the fluid of the fluid supply passage 10 through the intermediate fluid passage 14 and the fluid flow control passage 16 to the backpressure chamber B. Then, the sleeve 4 is set in a low-pressure operation position (low-pressure operation state). In other words, when the hydraulic pressure from the first port 11 acts on the first end surface 4A, the hydraulic pressure simultaneously acts on the second end surface 4B. At this time, the sleeve 4 moves toward the first port 11 due to a difference between pressure receiving areas of the first end surface 4A and the second end surface 4B, respectively. Thereafter, the sleeve 4 reaches a movement limiting position in the low-pressure operation state in which an outer circumferential edge portion of the first end surface 4A is in contact with the contact surface 2A of the valve body 2.

For example, when the hydraulic pressure in the fluid supply passage 10 increases in a state where the sleeve 4 is set in the low-pressure operation position, the valve 5 moves away from the first port 11 toward the guide body 25 against a biasing force of the spring 6 as illustrated in Fig. 2. In addition, an end portion of the valve 5, which is adjacent to the first port 11, is moved to the position of the outflow bores 8 in the direction of the central axis X. Therefore, the excessive fluid is discharged through the second port 12 from the valve body 2 and is returned to the oil pan 21. As a result, the sleeve 4 functions as a relief valve.

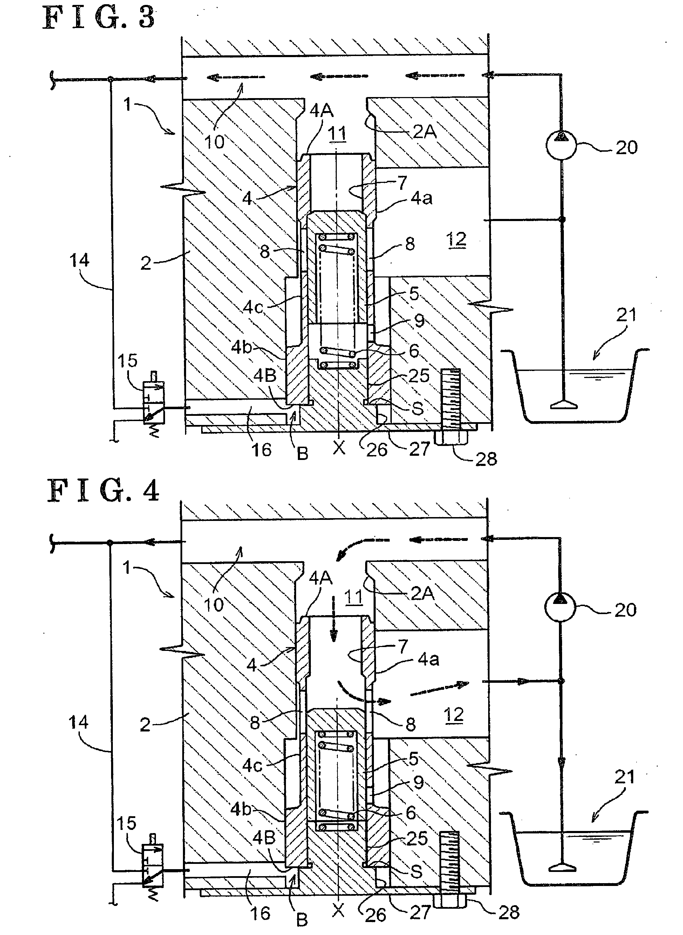

On the other hand, the switch valve 15 is operated to a fluid discharge position; therefore, the hydraulic pressure from the fluid supply passage 10 to the switch valve 15 is stopped as illustrated in Figs. 3 and 4. Simultaneously, the fluid in the fluid flow control passage 16 is discharged therefrom. Then, the sleeve 4 is set in the high-pressure operation position. In particular, in a state where the engine is in operation, the hydraulic pressure from the first port 11 consistently acts on the first end surface 4A and no hydraulic pressure acts on the second end surface 4B. Accordingly, the sleeve 4 is shifted to the high-pressure operation position by the hydraulic pressure acting on the first end surface 4A. Further, the second end surface 4B is brought into contact with the stoppers S; therefore, the sleeve 4 reaches the movement limiting position in the high-pressure operation state.

For example, when the hydraulic pressure of the fluid supply passage 10 increases in a state where the sleeve 4 is set in the high-pressure operation position, the valve 5 moves away from the first port 11 toward the guide body 25 against the biasing force of the spring 6 as illustrated in Fig. 4. In addition, the end portion of the valve 5, which is adjacent to the first port 11, is moved to the position of the outflow bores 8 in the direction of the central axis X. Therefore, the excessive fluid is discharged through the second port 12 from the valve body 2 and is returned to the oil pan 21. As a result, the sleeve 4 functions as the relief valve. In such case, the sleeve 4 is shifted to the movement limiting position in the high-pressure operation state. Accordingly, the spring 6 is further compressed and the high hydraulic pressure therefore needs to be applied to the valve 5 in order to open the outflow bores 8, compared to the case where the sleeve 4 set in the low-pressure operation position functions as the relief valve.

According to the relief valve 1 of the embodiment, the switch valve 15 is operationally switched between the fluid supply position and the fluid discharge position, thereby changing the position of the sleeve 4 by the use of the hydraulic pressure of the fluid and changing the level of the hydraulic pressure to open the valve 5 (i.e. the sleeve valve 4 is switched between the low-pressure operation position and the high-pressure operation position). In addition, in the case of the changing operation of the level of the hydraulic pressure by the relief valve 1, a mechanical device such as an actuator (for example, an electric motor and the like) is not required for the relief valve 1 in order to adjust a spring pressure of the spring 6. As a result, the relief valve 1 of the embodiment may be simply configured.

According to the relief valve 1 of the embodiment, the plural stoppers S are arranged at the guide body 25 so as to circumferentially surround the central axis X. Accordingly, for example, in a case where the sleeve 4 is moved by the hydraulic pressure acting on the first end surface 4A to a position in which the second end surface 4B is in contact with the plural stoppers S, the stoppers S uniformly receive the hydraulic pressure from the second end surface 4B. Thus, the hydraulic pressure does not act on the sleeve 4 in various directions that are not in parallel with the central axis X, therefore preventing an occurrence of friction between the stoppers S and the second end surface 4B. In addition, when the hydraulic pressure acts on the backpressure chamber B, the sleeve 4 receives the hydraulic pressure and thereafter promptly starts moving for changing or adjusting the level of the hydraulic pressure to open the valve 5.

As described above, in the relief valve 1 according to the embodiment, the outer surface of the sleeve 4 is divided into the three or more portions in the circumferential direction and the outflow bores 8 are formed in the divided portions, respectively. Consequently, even when the sleeve 4 rotates about the central axis X and circumferentially faces any direction while being accommodated in the accommodation chamber of the valve body 2, any of the plural outflow bores 8 may face the second port 12. As a result, the fluid may be smoothly discharged from any of the outflow bores 8 formed in the sleeve 4.

The relief valve according to the embodiment may be modified as follows.

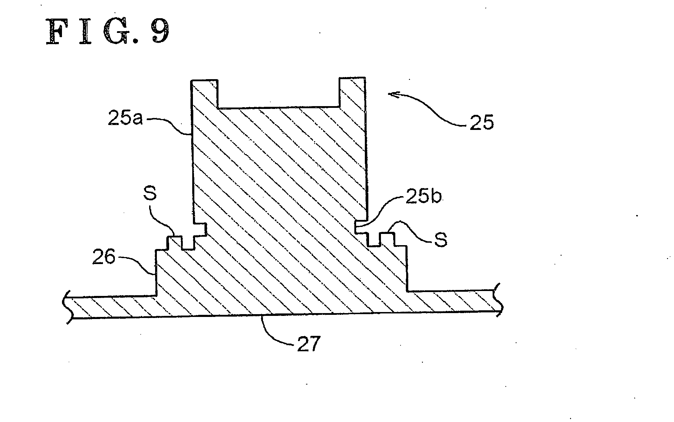

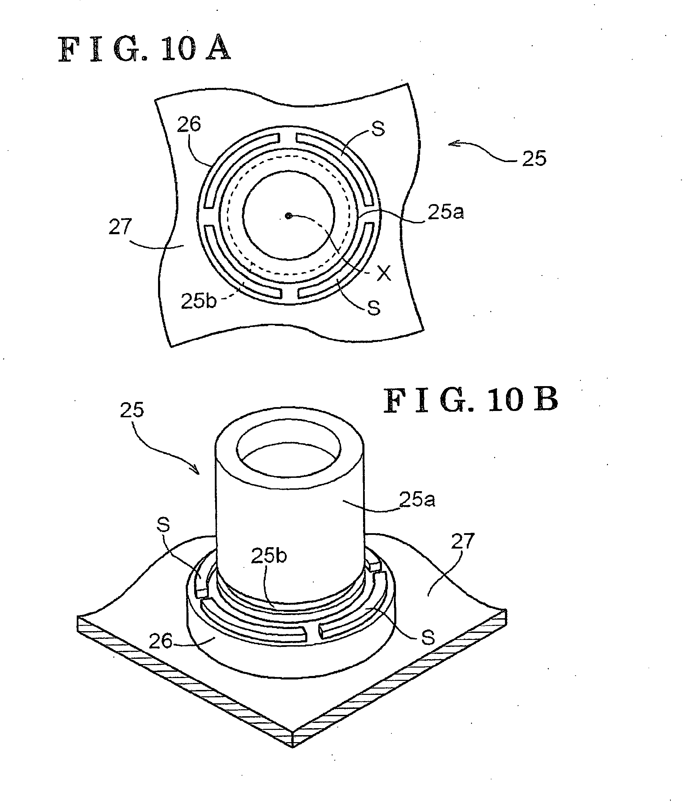

[First modified example of the embodiment] As illustrated in Figs. 9, 10A, and 10B, the plural stoppers S each having a circular arc and adjoining one another are formed in a circumferential area defined between the guide body 25 and the base portion 26. In addition, the plural stoppers S are positioned around the central axis X so as to divide the circumferential area into plural portions. Thus, the contact surfaces of the stoppers S configured as above are entirely brought in contact with the second end surface 4B of the sleeve 4 to thereby surely prevent the sleeve 4 from being misaligned from the central axis X even when the hydraulic pressure is non-uniformly applied to the sleeve 4. Moreover, the hydraulic pressure acts on the second end surface 4B in a case where the sleeve 4 being in contact with the stoppers S moves away therefrom. Consequently, the pressure receiving area of the sleeve 4 is secured; therefore, the position of the sleeve 4 may be surely changed (i.e. the sleeve 4 is switched between the low-pressure operation state and the high-pressure operation state).

[Second modified example of the embodiment] Alternatively, the stopper S may be integrally formed with the second end surface 4B of the sleeve 4 so as to protrude therefrom toward the guide body 25 along the central axis X. In addition, the plural stoppers S may be integrally formed with the second end surface 4B so as to circumferentially surround the central axis X in the same way as in the embodiment. Alternatively, the stopper S may be formed integrally formed with the second end surface 4B so as to be provided entirely circumferentially along the second end surface 4B about the central axis X in the same way as in the first modified example of the embodiment.

[Third modified example of the embodiment] In addition, the stopper S may be formed at the valve body 2 formed by the plate 27 and the like. In such case, the plural stoppers S may be formed at the valve body 2 so as to circumferentially surround the central axis X in the same way as in the embodiment. Alternatively, the stopper S may be formed so as to be provided entirely circumferentially along the valve body 2 about the central axis X in the same way as in the first modified example of the embodiment. In addition, a member configured to include the stopper S may be attached to the plate 27 or the valve body 2. Or more specifically, such member may be integrally formed with the plate 27 or the valve body 2.

The relief valve 1 according to the embodiment of the disclosure may be adapted not only to an apparatus to adjust the level of the hydraulic pressure of the fluid for lubricating the engine, but used for various types of hydraulic pressure adjustments.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A relief valve (1), comprising:
a valve body (2) including therein an accommodation chamber formed along a central axis (X), a first port (11) through which a fluid flows into the accommodation chamber, and a second port (12) through which the fluid is discharged from the accommodation chamber;
a sleeve (4) formed into a cylindrical hollow shape about the central axis (X) to slidably move along the central axis (X) within the accommodation chamber, the sleeve (4) including an inflow bore (7) connecting to the first port (11) and an outflow bore (8) connecting to the second port (12), the sleeve (4) having a first end surface (4A) which is adjacent to the first port (11), and a second end surface (4B) which is provided in an opposite direction from the first port (11) in a direction of the central axis (X);
a valve (5) receiving a hydraulic pressure of the fluid from the first port (11) and sliding within the sleeve (4) along the central axis (X) to adjoin and separate from the inflow bore (7), the valve (5) being adjacent to the inflow bore (7) to close the outflow bore (8) and being separated from the inflow bore (7) to open the outflow bore (8);
a biasing member (6) applying a biasing force to the valve (5) in a direction against the hydraulic pressure from the first port (11);
a valve position change mechanism (14, 15, 16) applying the hydraulic pressure to the second end surface (4B) to set the sleeve (4) in a low-pressure operation position that is adjacent the first port (11), the valve position change mechanism releasing the hydraulic pressure applied to the second end surface (4B) and setting the sleeve (4) in a high-pressure operation position by the hydraulic pressure acting on the first end surface (4A), the high-pressure operation position being provided in the opposite direction from the first port (11) in the direction of the central axis (X); and
a stopper (S) formed in a position circumferentially around the central axis (X) and determining a movement limiting position of the sleeve (4) toward the high-pressure operation position, **characterized in that**
the stopper includes a plurality of stoppers (S) adjoining one another in the circumferential area around the central axis (X), the fluid flows between the plurality of stoppers and the hydraulic pressure is applied to the second end surface (4B).

2. The relief valve (1) according to Claim 1, wherein the plurality of stoppers (S) are formed at equal intervals in a circumferential area around the central axis (X).

3. The relief valve (1) according to Claim 1 or 2 further comprising a guide body (25) fitted in the sleeve (4) and having a guide surface (25a) defined on an outer circumferential surface to slidably contact an inner surface of the sleeve (4), wherein the stopper (S) is integrally formed with a base end portion of the guide body (25), and a groove (25b) having an outer diameter smaller than an outer diameter of the guide surface (25a) is formed between the stopper (S) and the guide surface (25a).

4. The relief valve (1) according to Claim 1 or 2, wherein the outflow bore (8) includes a plurality of outflow bores (8) circumferentially formed in an outer surface of the sleeve (4).

5. The relief valve (1) according to Claim 4, wherein the outflow bores (8) are circumferentially formed at equal intervals on an entire area of the outer surface of the sleeve (4).

6. The relieve valve (1) according to any one of Claims 1 to 5, wherein the stopper (S) is formed at a plate (27) connected to the valve body (2) to close the accommodation chamber.

## Patentansprüche

1. Ein Ablassventil (1) mit:
einem Ventilgehäuse (2), das in sich eine Aufnahmekammer, die längs einer zentralen Achse (X) ausgebildet ist, eine erste Öffnung (11), durch die ein Fluid in die Aufnahmekammer strömt, und eine zweite Öffnung (12) enthält, durch die das Fluid aus der Aufnahmekammer abgegeben wird;
einer Hülse (4), die in zylindrischer hohler Gestalt um die zentrale Achse (X) ausgebildet ist, um sich gleitend längs der zentralen Achse (X) innerhalb der Aufnahmekammer zu bewegen, welche Hülse (4) eine Einströmbohrung (7), die an die erste Öffnung (11) angeschlossen ist, und eine Ausströmbohrung (8) enthält, die an die zweite Öffnung (12) angeschlossen ist, und eine erste Endfläche (4A), die neben der ersten Öffnung (11) ist, und eine zweite Endfläche (4B) aufweist, die in Richtung der zentralen Achse (X) in von der ersten Öffnung (11) entgegengesetzter Richtung vorhanden ist;
einem Ventil (5), das hydraulischen Druck des Fluids von der ersten Öffnung (11) her erhält und innerhalb der Hülse (4) längs der zentralen Achse (X) gleitet, um an die Einströmbohrung (7) anzugrenzen und sich von der Einströmbohrung (7) zu trennen, wobei das Ventil (5) neben der Einströmbohrung (7) ist, um die Ausströmbohrung (8) zu schließen und von der Einströmbohrung (7) getrennt ist, um die Ausströmbohrung (8) zu öffnen;
einem Vorspannbauteil (6), das eine Vorspannkraft auf das Ventil (5) in eine Richtung gegen den hydraulischen Druck von der ersten Öffnung (11) her aufbringt;
einem Ventilstellungsänderungsmechanismus (14, 15, 16), der den hydraulischen Druck auf die zweite Endfläche (4B) aufbringt, um die Hülse (4) in eine Niederdruckbetriebsstellung einzustellen, die neben der ersten Öffnung (11) ist, wobei der Ventilstellungsänderungsmechanismus den auf die zweite Endfläche (4B) wirkenden hydraulischen Druck freigibt und die Hülse (4) mittels des auf die erste Endfläche (4A) wirkenden hydraulischen Drucks in eine Hochdruckbetriebsstellung stellt, wobei die Hochdruckbetriebsstellung in der entgegengesetzten Richtung von der ersten Öffnung (11) in Richtung der zentralen Achse (X) vorhanden ist; und
einem Anschlag (S), der an einer Stelle umfangsmäßig um die zentrale Achse (X) herum ausgebildet ist und eine Bewegung begrenzende Stellung der Hülse (4) in Richtung auf die Hochdruckbetriebsstellung bestimmt, **dadurch gekennzeichnet, dass**
der Anschlag eine Mehrzahl von Anschlägen (S) enthält, die in dem Umfangsbereich um die zentrale Achse (X) aneinander angrenzen, wobei das Fluid zwischen der Mehrzahl von Anschlägen strömt und der hydraulische Druck auf die zweite Endfläche (4B) wirkt.

2. Das Ablassventil (1) nach Anspruch 1, wobei die Mehrzahl von Anschlägen (S) in gleichen Intervallen in einem Umfangsbereich um die zentrale Achse (X) ausgebildet ist.

3. Das Ablassventil (1) nach Anspruch 1 oder 2, weiter enthaltend einen Führungskörper (25), der in die Hülse (4) eingepasst ist und eine Führungsfläche (25a) aufweist, die an einer Außenumfangsfläche derart definiert ist, dass sie eine Innenfläche der Hülse (4) gleitbar berührt, wobei der Anschlag (S) integral mit einem Basisendteil des Führungskörpers (25) ausgebildet ist und eine Nut (25b) mit einem Außendurchmesser kleiner als ein Außendurchmesser der Führungsfläche (25a) zwischen dem Anschlag (S) und der Führungsfläche (25a) ausgebildet ist.

4. Das Ablassventil (1) nach Anspruch 1 oder 2, wobei die Ausströmbohrung (8) eine Mehrzahl von Ausströmbohrungen (8a) enthält, die umfangsmäßig in einer Außenfläche der Hülse (4) ausgebildet sind.

5. Das Ablassventil (1) nach Anspruch 4, wobei die Ausströmbohrungen (8) umfangsmäßig in gleichen Intervallen auf einem gesamten Bereich der Außenfläche der Hülse (4) ausgebildet sind.

6. Das Ablassventil (1) nach einem der Ansprüche 1 bis 5, wobei der Anschlag (S) an einer Platte (27) ausgebildet ist, die mit dem Ventilkörper (2) verbunden ist, um die Aufnahmekammer zu verschließen.

## Revendications

1. Soupape de décharge (1) comprenant :
- un corps de soupape (2) comprenant à l'intérieur une chambre de réception formée le long d'un axe central (X), un premier accès (11) au travers duquel un fluide s'écoule dans la chambre de réception, et un deuxième accès (12) au travers duquel le fluide est libéré au départ de la chambre de réception ;
- un manchon (4) formé en une forme cylindrique creuse autour de l'axe central (X) pour bouger en coulissement le long de l'axe (X) dans la chambre de réception, le manchon comprenant un trou d'entrée (7) reliant le premier accès (11) et un trou de sortie (8) relié au deuxième accès (12), le manchon (4) présentant une première surface d'extrémité (4A) qui est adjacente au premier accès (11), et une deuxième surface d'extrémité (4B) qui est agencée dans une direction opposée au premier accès (11) dans une direction de l'axe central (X) ;
- une soupape (5) recevant une pression hydraulique d'un fluide depuis le premier accès (11) et coulissant à l'intérieur du manchon (4) le long de l'axe central (X) pour se raccorder et se séparer du trou d'entrée (7), la soupape (5) étant adjacente au trou d'entrée (7) pour fermer le trou de sortie (8) et étant séparée du trou d'entrée (7) pour ouvrir le trou de sortie (8) ;
- un membre de sollicitation (6) appliquant une force de sollicitation à la soupape (5) dans une direction opposée à la pression hydraulique issue du premier accès (11) ;
- un mécanisme de changement de position de soupape (14, 15, 16) appliquant la pression hydraulique sur la deuxième surface d'extrémité (4B) pour positionner le manchon (4) dans une position d'opération basse pression qui est adjacente au premier accès (11), le mécanisme de changement de position libérant la pression hydraulique appliquée sur la deuxième surface d'extrémité (4B) et positionnant le manchon (4) dans une position d'opération haute pression par la pression hydraulique agissant sur la première surface d'extrémité (4A), la position d'opération haute pression étant agencée dans la direction opposée depuis le premier accès (11) dans la direction de l'axe central (X) ; et
- un arrêt (S) formé dans une position circonférentielle autour de l'axe central (x) et déterminant une position de limitation de mouvement du manchon (4) vers la position d'opération haute pression, **caractérisée en ce que**
- l'arrêt comprend une pluralité d'arrêts (S) se raccordant l'un à l'autre dans la zone circonférentielle autour de l'axe central (X), le fluide s'écoulant entre la pluralité d'arrêts et la pression hydraulique étant appliquée sur la deuxième surface d'extrémité (4B).

2. Soupape de décharge (1) selon la revendication 1, dans laquelle la pluralité d'arrêts (S) sont formés à intervalles égaux dans une zone circonférentielle autour de l'axe central (X).

3. Soupape de décharge (1) selon la revendication 1 ou 2 comprenant en outre un corps de guidage (25) intercalé dans le manchon (4) et présentant une surface de guidage (25a) définie sur une surface externe circonférentielle pour être en contact coulissant avec une surface interne du manchon (4), où l'arrêt (S) est intégralement formé avec une partie d'extrémité de base du corps de guidage (25), et une rainure (25b) présentant un diamètre extérieur plus petit qu'un diamètre extérieur de la surface de guidage (25a) est formée entre l'arrêt (S) et la surface de guidage (25a).

4. Surface de décharge (1) selon la revendication 1 ou 2, dans laquelle le trou de sortie (8) comprend une pluralité de trous de sortie (8) formés circonférentiellement dans une surface externe du manchon (4).

5. Soupape de décharge (1) selon la revendication 4, dans laquelle les trous de sortie (8) sont formés circonférentiellement à intervalles égaux sur une entière surface de la surface externe du manchon (4).

6. Soupape de décharge (1) selon l'une quelconque des revendications 1 à 5, dans laquelle l'arrêt (S) est formé sur une plaque (27) reliée au corps de soupape (2) pour fermer la chambre de réception.
